# EUROPEAN PATENT APPLICATION

(11) **EP 0 974 970 A1**
(43) Date of publication of application: **26.01.2000**
(21) Application number: 98947917.5
(22) Date of filing: 16.10.1998
(51) Int. Cl.: G11B 23/03

(54) **DISK CARTRIDGE**

(30) Priority: 14.11.1997 JP 31408597
(71) Applicant: Sony Corporation, Tokyo 141-0001 (JP)
(72) Inventor: MASUGI, Shinji, Shinagawa-ku, Tokyo 141-0001 (JP); MEGURO, Hiroshi, Shinagawa-ku, Tokyo 141-0001 (JP)
(74) Representative: Körber, Wolfhart, Dr. rer.nat.
(86) International application number: JP9804697
(87) International publication number: WO9926250

(57) **Abstract**

An upper shell 21 of a disc cartridge 1 has a circular rib 61 delimiting an area which is used as a housing spacing 62. When the disc cartridge 1 is loaded on the recording and/or reproducing apparatus, a motor output shaft 71 has its end 71a housed in the housing spacing 62 in a manner free of contact with the inner surface of the upper shell 21 when the disc cartridge 1 is loaded on the recording and/or reproducing apparatus. This reliably prevents dust or dirt from being produced as a result of the upper shell 21 contacting with the output shaft 71 to raise the reliability of the recording/reproducing operation as well as to improve the recording capacity and the signal transfer rate.

## Description

### Technical Field

This invention relates to a disc cartridge holding a disc-shaped recording medium, such as a magnetic disc.

### Background Art

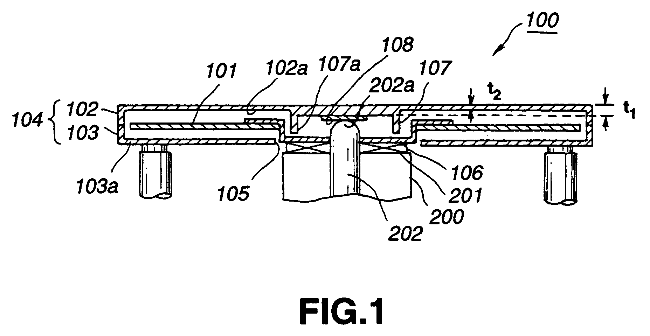

Heretofore, a disc cartridge 100, holding a disc-shaped recording medium 101, such as a magnetic disc, is combined from an upper shell 102 and a lower shell 103 to constitute a main cartridge body unit 104, as shown in Fig. 1. In a disc housing inside of this main cartridge body unit 104 is rotatably housed a disc-shaped recording medium 101.

In this main cartridge body unit 104, a pair of recording/reproducing apertures, not shown, are formed facing each other for partially exposing a signal recording area of the disc-shaped recording medium 101 held in the disc housing across the inner and outer rims of the disc, so that a magnetic head provided on the recording and/or reproducing apparatus can be introduced via these recording/reproducing apertures. In these recording/reproducing apertures is mounted a shutter member, not shown, for aperture opening/closing movements.

In the lower shell 103 is formed, a table intruding opening 105 into which is intruded a turntable 200 provided on the recording and/or reproducing apparatus. This table intruding opening 105 allows a center hub 106 of metal, mounted at the center of the disc-shaped recording medium 101 held in the main cartridge body unit 104, to be exposed to outside of the lower shell 103. When the disc cartridge 100 is loaded on the recording and/or reproducing apparatus, the disc-shaped recording medium 101 is chucked to the turntable 200 by the center hub 106 being attracted and deposited by a chuck magnet 201 of the turntable 200 intruded via the table intruding opening 105 into the inside of the main cartridge body unit 104, so that the tape-shaped recording medium 101 is rotated in unison with the turntable 200.

The upper shell 102 is also formed at the center of the disc housing with a circular rib 107 for preventing idle movement of the disc-shaped recording medium 101 in the main cartridge body unit 104. This circular rib 107 is protruded from an inner surface 102a of the upper shell towards an inner surface 103a of the lower shell. The circular rib 107 regulates movements of the center hub 106 and idle movements of the disc-shaped recording medium 101 in the main cartridge body unit 104 by a lateral surface 107a thereof compressing against the center hub 106 mounted at the center of the disc-shaped recording medium 101.

The portion of the upper shell 102 surrounded by the circular rib 107 has a thickness t1 larger than its remaining portion. That is, the area of the upper shell 102 surrounded by the circular rib 107 is raised towards the lower shell 103. The surface of the area surrounded by the circular rib 107 operates as an abutment surface for allowing abutment thereon of a distal end 202a of a rotary shaft 202 of a motor used for running the turntable 200 in rotation when the disc cartridge 100 is loaded on the recording and/or reproducing apparatus.

When the disc cartridge 100 is loaded in this manner on the recording and/or reproducing apparatus, the distal end 202a of the rotary shaft 202 of the motor compresses against an abutment surface formed on the upper shell 102 to regulate the height level of the upper shell 102, so that, even if the main cartridge body unit 104 is deformed, the clearance in the main cartridge body unit 104 is kept constant to suppress e.g., surface deviations of the disc-shaped recording medium 101.

On the portion of the abutment surface on which abuts the distal end 202a of the motor shaft 202 is stuck a piece of a protective material 108, such as high-molecular polyethylene. This piece 108 operates to prevent the inner surface 102a of the upper shell from being scraped due to rotation of the motor shaft 202.

If the above-described disc cartridge 100 is loaded on the recording and/or reproducing apparatus, the shutter member is moved to open the recording/reproducing aperture. A magnetic head of the recording and/or reproducing apparatus is intruded into the inside of the main cartridge body unit 104. Also, the turntable 200 of the recording and/or reproducing apparatus and the distal end 202a of the motor rotary shaft 202 is intruded into the main cartridge body unit 104 via the table intruding opening 105. At this time, the distal end 202a of the motor rotary shaft 202 compresses against the abutment surface of the upper shell 102 via the piece of the protective material 108.

By rotationally driving of the motor, the disc-shaped recording medium 101 is run in rotation along with the center hub 106 engaged in the turntable 200, so that information signals are recorded or reproduced for the rotating disc-shaped recording medium 101 by recording/reproducing means.

Meanwhile, in a system employing this sort of the disc cartridge, the information handled tends to be increasingly diversified and voluminous. In order to cope with this trend, it is required of the disc cartridge to be increased in recording capacity and in transfer rate.

For meeting with this request, there has been proposed a technique for reducing the track width of the signal recording track, for increasing the linear recording density of the disc-shaped recording medium to increase the recording capacity per unit area and for increasing the rpm of the disc-shaped recording medium to improve the transfer rate.

However, if, in the above-described conventional disc cartridge 100, the rotary shaft 202 of the motor is run in rotation at an elevated speed to increase the rpm of the disc-shaped recording medium 101, the piece of the protective material 108 or the abutment surface of the upper shell 102 is scraped by the distal end face 202a of the motor shaft 202 thus yielding fine dust and dirt.

If such fine dust and dirt are deposited to the signal recording area of the disc-shaped recording medium 101, the risk is high that errors be produced during recording/reproduction. In particular, in a disc-shaped recording medium having increased recording density, recording/reproducing errors tend to be produced even with the deposited dust and dirt of the minute size.

### Disclosure of the Invention

It is therefore an object of the present invention to provide a disc cartridge in which dust and dirt can be reliably prohibited from being yielded to improve the reliability of the recording/reproducing operation as well as the recording capacity and the transfer rate.

The present invention provides a disc cartridge including a disc-shaped recording medium, paired upper and lower shells making up a main cartridge body unit for housing the disc-shaped recording medium therein and a circular projection formed at the center of the inner surface of the lower shell for limiting idle movements of the disc-shaped recording medium in the main cartridge body unit. There is provided a housing spacing in an area delimited by the circular projection for housing the distal end of rotationally driving means, adapted for rotationally driving the disc-shaped recording medium on loading the disc cartridge on the recording and/or reproducing apparatus, in a contact free manner with respect to the inner surface of the upper shell.

When the disc cartridge is loaded on the recording and/or reproducing apparatus, the rotationally driving means of the recording and/or reproducing apparatus is intruded into the inside of the main cartridge body unit. At this time, the distal end of the rotationally driving means is housed in the housing spacing corresponding to the area delimited by the circular projection in a manner free of contact with the inner surface of the upper shell.

Preferably, the outer dimensions of the main cartridge body unit are approximately equal to those of the disc cartridge the recording and/or reproduction for which is made as the distal end of the rotationally driving means rotationally driving the disc-shaped recording medium on loading the disc cartridge on the recording and/or reproducing apparatus is kept in contact with the inner surface of the upper shell.

The disc cartridge, having the outer dimensions approximately equal to those of the disc cartridge of the type in which the distal end of the rotationally driving means rotationally driving the disc-shaped recording medium on loading the disc cartridge on the recording and/or reproducing apparatus is kept in contact with the inner surface of the upper shell, can be rendered compatible with this type of the disc cartridge.

Preferably, the areas of the inner surface of the upper and lower shells facing the disc-shaped recording medium are planar.

With the disc cartridge in which the areas of the inner surface of the upper and lower shells facing the disc-shaped recording medium are planar, a smooth air stream is assured in the main cartridge body unit as a result of rotation of the disc-shaped recording medium thus suppressing surface deviations of the disc-shaped recording medium.

### Brief Description of the Drawings

Fig. 1 is a cross-sectional view showing a conventional disc cartridge loaded on a recording and/or reproducing apparatus.
Fig.2 is a perspective view of an embodiment of a disc cartridge of the present invention, shown from the front side.
Fig.3 is a perspective view of the disc cartridge of Fig.2 shown from the back side.
Fig.4 is an exploded perspective view of a disc cartridge shown in Fig.2.
Fig.5 is a perspective view showing an upper shall of the main cartridge body unit owned by the disc cartridge shown in Fig.2.
Fig.6 is a plan view showing an upper shall of the main cartridge body unit owned by the disc cartridge shown in Fig.2.
Fig.7 is a cross-sectional view showing the state in which the disc cartridge shown in Fig.2 is loaded on the recording and/or reproducing apparatus.

### Best Mode for Carrying Out the Invention

Referring to the drawings, preferred embodiments of the present invention will be explained in detail.

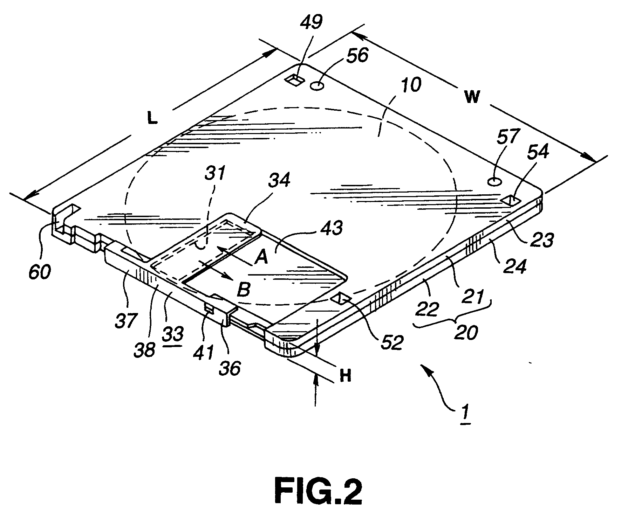

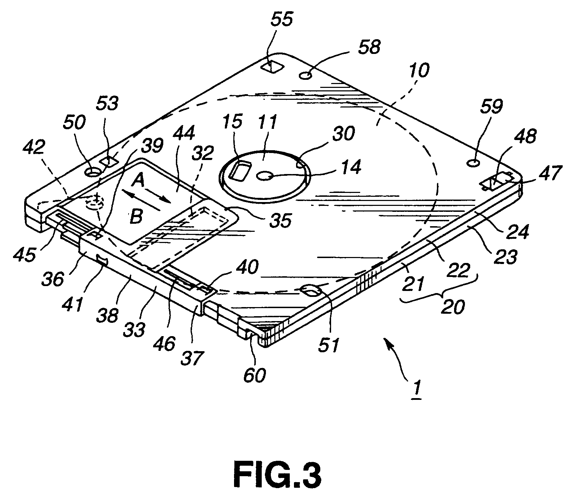

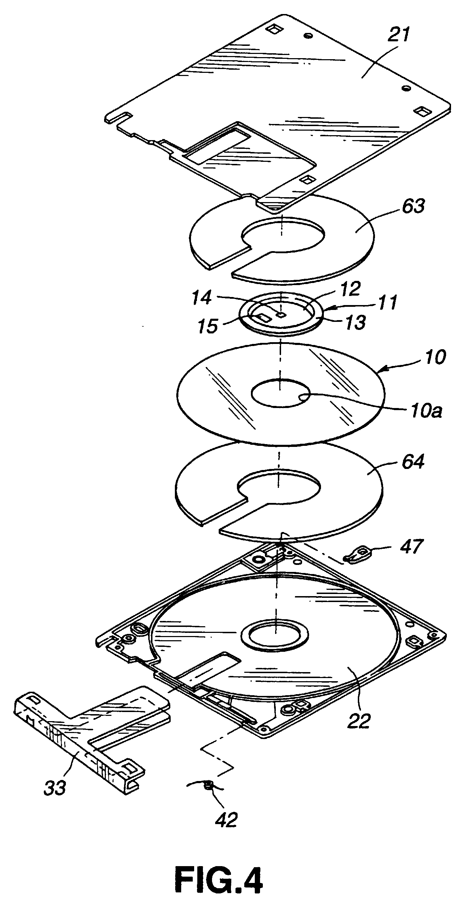

A disc cartridge 1, shown as an embodiment of the present invention, is a magnetic disc 10 with a diameter of 3.5 inch held rotatably in a main cartridge body unit 20, as shown in a front side perspective view of Fig.2, a back side perspective view of Fig.3 and in an exploded perspective view of Fig.4. The magnetic disc 10 is referred to hereinafter simply as a disc 100.

The disc 100 is comprised of a base film of synthetic resin, punched to a disc shape having a center opening 10a and on both surfaces of which are formed magnetic layers. In this center opening 10a is fitted a center hub 11.

The center hub 11 is formed of magnetic metal, such as stainless steel or iron, and has a fitting portion 12 of substantially the same diameter as the center opening 10a of the disc 10 and a flange 13 expanded integrally from the outer rim of the fitting portion 12. In the fitting portion 12 is formed a through-hole 14 passed through by a rotary shaft of a motor. In the vicinity of the through-hole 14 is formed a driving opening 15 passed through by a driving member provided on the turntable.

This center hub 11 is mounted on the disc 10 by having the fitting portion 12 fitted into the center opening 10a of the disc 10 and by having the flange 13 bonded to the inner rim in the vicinity of the center opening 10a of the disc 10.

With the disc 10, as compared to the disc of a conventional disc cartridge, as later explained, the track width is reduced and the linear recording density is increased to increase the linear recording density.

The main cartridge body unit 20 is formed as a thin box by abutting and combining upper and lower shells 21, 22 each of a shallow saucer shape, molded from a synthetic resin material.

On the outer rims of the upper shell 21 and the lower shell 22 are integrally protuberantly formed outer peripheral wall sections 23, 24, as shown in Figs.2 and 3. The outer peripheral wall sections 23, 24, formed by partially cutting off lateral surfaces towards the front sides of the upper and lower shells 21, 22, are abutted together to form outer peripheral surfaces of the main cartridge body unit 20.

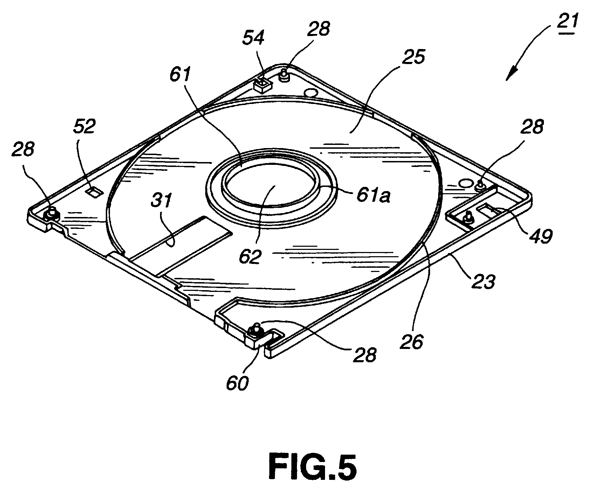

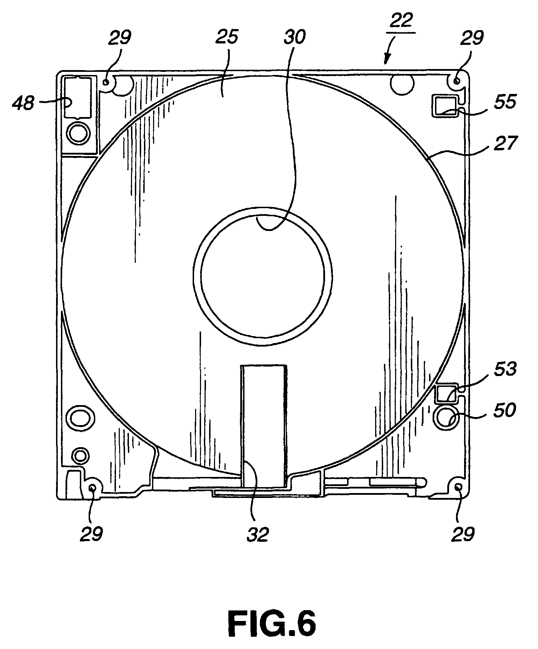

On the inner surfaces of the upper shell 21 and the lower shell 22 are set upright disc housing forming wall sections 26, 27 abutted to each other to delimit a circular disc housing 25, as shown in Figs.5 and 6, which are a perspective view showing the inner surface of the upper shell 21 and a plan view showing the inner surface of the lower shell 22, respectively.

On the inner surface of the upper shell 21 are formed plural engagement projections 28 in the vicinity of the corners of an outer peripheral wall section 23. On the inner surface of the lower shell 22 are formed plural insertion holes 29 passed through by these engagement projections 28 provided on the upper shell 21. On the outer periphery of each engagement projection 28 provided on the inner surface of the upper shell 21 are formed annular abutments integrally with the engagement projections 28. When the engagement projections 28 are inserted into the insertion holes 29, the distal ends of the abutments compress against the outer rim portions of the insertion holes 29 formed in the inner surfaces of the lower shell 22.

The upper shell 21 and the lower shell 22 are unified together by having the engagement projections 28 inserted into the insertion holes 29 and by having the distal ends of the engagement projections 28 protruded from the insertion holes 29 fused by non-vibrating type welding means to form retainers, not shown, with the retainers being then retained by the outer rim portions of the insertion holes 29.

At this time, the upper shell 21 and the lower shell 22 have outer peripheral wall sections 23, 24 abutted to each other to form outer peripheral wall sections of the main cartridge body unit 20, with the disc housing forming wall sections 26, 27 being then abutted to each other to constitute the disc housing 25.

With the present main cartridge body unit 20, since the upper shell 21 and the lower shell 22 are unified together as described above and no mechanical vibrations are produced on coupling, it is possible to suppress yielding of contaminants, such as dust and dirt, ascribable to rubbing between the upper and lower shells 21, 22, thus reliably prohibiting the contaminants from being deposited on the disc held in the main cartridge body unit 20.

At the center of the disc housing 25 of the lower shell 22 is formed a circular table intruding opening 30 into which are intruded a turntable of the recording and/or reproducing apparatus and the distal end of a rotary shaft of a turntable rotating motor when the disc cartridge 1 is loaded in position on the recording and/or reproducing apparatus. This table intruding opening 30 permits the center hub 11, mounted in the center opening of the disc 10 held in the main cartridge body unit 20, to be exposed to outside via the lower shell 22.

In the upper and lower shells 21, 22, there are formed recording/reproducing apertures 31, 32 for exposing at least portions of the signal recording area of the disc 10 held in the disc housing 25 to outside the main cartridge body unit 20 across the inner and outer rims of the disc. These recording/reproducing apertures 31, 32 are formed at the mid portions along the widths of the upper and lower shells 21, 22 for extending from the positions adjacent to the table intruding opening 30 to the front side of the main cartridge body unit 20.

On the main cartridge body unit 20 is mounted a substantially T-shaped shutter member 33 for movement in the direction indicated by arrow A or B in Figs.2 and 3 for opening or closing the recording/reproducing apertures 31, 32. The shutter member 33 is formed of a metallic material so as to be substantially U-shaped in cross-section, and is made up of shutter portions 34, 35, facing in parallel with each other, supporting portions 36, 37, disposed on both sides in the movement direction of the shutter member 33 so as to be movably supported by the main cartridge body unit 20 and a connecting portion 38 interconnecting the proximal ends of the shutter portions 34, 35 and also interconnecting the shutter portions 34, 35 and the supporting portions 36, 37.

The shutter portions 34, 35 are rectangular is shape and is sized to be slightly larger than the recording/reproducing apertures 31, 32. These supporting portions 36, 37 are formed with guide pieces 39, 40 supported for movement by the lower shell 22. The guide pieces 39, 40 are formed by partially folding back the inner portions of the major surface of the supporting portions 36, 37 extending coplanar as the shutter portion 35 adapted for opening or closing the recording/reproducing aperture 32 of the lower shell 22. These guide pieces 39, 40 are supported for movement on the lower shell 22.

The portion of the connecting portion 38 closer to the supporting portion 36 is folded back to form a spring retention piece 41 by which is retained en end of a shutter spring 42 provided at a front side corner of the lower shell 22. The shutter member 33 is biased in the direction indicated by arrow A in Figs.2 and 3 under the force of the shutter spring 42 for movement in the direction of closing the recording/reproducing apertures 31, 32.

Thus, during non-use time of the disc cartridge 1, the shutter member 33 closes the recording/reproducing apertures 31, 32 to prevent contaminants from being intruded via the recording/reproducing apertures 31, 32 into the disc housing 25 to be attached to or to graze the disc 10.

When the disc cartridge 1 is loaded on the recording and/or reproducing apparatus, the shutter member 33 is engaged by a shutter driving member provided on the front side of the main cartridge body unit 20 and thereby moved against the bias of the shutter spring 42 in the direction indicated by arrow B in Figs.2 and 3 along the main cartridge body unit 20. This shifts the shutter portions 34, 35away from the recording/reproducing apertures 31, 32 to open the recording/reproducing apertures 31, 32.

The upper and lower shells 21, 22 are provided with guide recesses 43, 44 around the recording/reproducing apertures, respectively, for guiding the shutter portions 34, 35 of the shutter member 33, respectively. The lower shell 22 is also formed with guide grooves 45, 46 extending along the movement direction of the shutter member 33. In these guide grooves 45, 46 are movably inserted guide pieces 39, 40 of the shutter member 33, respectively.

On a rear side corner of the main cartridge body unit 20 is formed a mistaken recording inhibiting member 47 for preventing erasure of information signals due to inadvertent recording of information signals on the disc 10.

This mistaken recording inhibiting member 47 is mounted within an opening 48 formed in a rear side corner of the lower shell 22 for movement from a first position permitting writing of information signals on the disc 10 to a second position inhibiting recording of information signals on the disc 10. At a corner of the upper shell 21 in register with the opening 48 of the lower shell 22 is formed a detection opening 49 in communication with the opening 48. Into this detection opening 49 is inserted the detection member of the recording and/or reproducing apparatus. The detection member, introduced int this detection opening 49, detects whether the mistaken recording inhibiting member 47 is at the first position or at the second position to check whether or not information signals can be recorded on the disc 10.

In the vicinity of both lateral sides along the width of the lower shell 22 are formed a pair of positioning holes 50, 51 for positioning the disc cartridge 1 in the recording and/or reproducing apparatus. When loaded on the recording and/or reproducing apparatus, the disc cartridge 1 is positioned by positioning lugs of the recording and/or reproducing apparatus being inserted into the positioning holes 50, 51.

The upper and lower shells 21, 22 are formed with through-holes 52, 53, making up a first recording capacity discriminating hole for discriminating the recording capacity of the housed disc 10 in adjacency to the positioning hole 50. The upper and lower shells 21, 22 are also formed with through-holes 54, 55, making up a second recording capacity discriminating hole, in adjacency to the opposite side rear corner. When the upper and lower shells 21, 22 are combined together, the through-holes 52, 54 provided in the upper shell 21 and the through-holes 53, 55 provided in the lower shell 22 are in register with each other to constitute first and second recording capacity discriminating holes extending through the main cartridge body unit 20 along its thickness.

In the surface of the upper shell 21 in the vicinity of its both rear side corners are formed first and second recording capacity discriminating recesses 56, 57. In the surface of the lower shell 22 are formed third and fourth recording capacity discriminating recesses 58, 59.

On a front side corner of the upper shell 21 is formed a design parameter discriminating cut-out 60 for discriminating the design parameters of the disc cartridge 1 when the latter is loaded on the recording and/or reproducing apparatus. The design parameters of the disc cartridge are detected by whether or not a design parameter detection member provided on the recording and/or reproducing apparatus can be intruded into the design parameter discriminating cut-out 60.

At a mid portion on the inner surface of the upper shell 21 is formed a circular rib 61 for being protruded towards the lower shell 22 for suppressing idle movement of the disc 10 housed in the disc housing 25.

This circular rib 61 is formed as a circle slightly smaller than the fitting portion 12 of the center hub 11 mounted on the disc 10. If, during non-use of the disc cartridge 1, the disc 10 is moved in the main cartridge body unit 20, the circular rib 61 has its lateral side 61a engaged with the outer periphery of the fitting portion 12 of the center hub 11. This regulates movements of the center hub 11 and hence idle movements of the disc 20 in the main cartridge body unit 20.

Since the circular rib 61 is provided on the upper shell 21 to regulate idle movements of the disc 20 housed in the disc housing 25, it is possible to prevent damage to the disc 10 such as during transport.

In an area surrounded by the circular rib 61 in the main cartridge body unit 20 is delimited a housing spacing 62 for housing the distal end of the rotary shaft of the motor on the recording and/or reproducing apparatus intruded in the main cartridge body unit 20 via the table intruding opening 30 formed in the lower shell 22, when the disc cartridge 1 is loaded on the recording and/or reproducing apparatus, so that the distal end of the motor shaft will be free of contact with the inner surface of the upper shell 21.

When the disc cartridge 1 is loaded on the recording and/or reproducing apparatus, the rotary shaft of the motor on the recording and/or reproducing apparatus adapted for running the disc 10 in rotation has its distal end intruded via the table intruding opening 30 formed in the lower shell 22 into the main cartridge body unit 20 so as to be passed through the through-hole 14 in the center hub 11. At this time, the distal end of the rotary shaft of the motor protruded towards the upper shell 21 through the through-hole 14 of the center hub 11 is housed in the housing spacing 62 without compressing against the inner surface of the upper shell 21.

The portion of the upper shell 21 surrounded by the circular rib 61 has a thickness equal to or less than the remaining portion of the upper shell 21. This provides a spacing in the housing spacing 62 sufficient to hold the distal end of the rotary shaft of the motor protruded through the through-hole 14 of the center hub 11 towards the upper shell 21 so that the distal end is free of abutting contact with the inner surface of the upper shell 21.

Since the distal end of the motor adapted for running the disc 10 in rotation is prevented from compressing against the inner surface of the upper shell 21, as described above, the upper shell 21 of the disc cartridge 1 is safeguarded against scraping due to motor rotation, thus positively preventing dust and dirt from being deposited on the disc 10 housed in the main cartridge body unit 20.

Since the disc 10 housed in the main cartridge body unit 20 of the disc cartridge 1 is improved in recording density, there are occasions wherein fine dust and dirt give rise to an increased error rate. However, since deposition of dust and dirt on the disc 10 housed in the main cartridge body unit 20 of the disc cartridge 1 is positively inhibited, as described above, the disc cartridge 1 has high operational reliability in recording/reproduction.

The inner surfaces of the upper and lower shells 21, 22 constituting the disc housing 25 are formed as flat surfaces, as shown in Figs.5 and 6. That is, the inner surfaces delimiting the disc housing 25 of the upper and lower shells 21, 22 are free of projections or recesses.

On the inner surfaces of the upper and lower shells 21, 22 making up the disc housing 25 are arranged an upper liner sheet 63 and a lower liner sheet 64, respectively.

The upper liner sheet 63 and the lower liner sheet 64 are each comprised of a protective layer of a non-woven cloth and a laminated layer of a high-molecular material. The upper liner sheet 63 and the lower liner sheet 64 are substantially of the same diameter as the disc 10 and are formed with center holes larger in diameter than the center opening 10a of the disc 10 and which are cut out to a width corresponding to the recording/reproducing apertures 31, 32 so that the upper and lower liner sheets 63, 64 are substantially shaped as C. These upper and lower liner sheets 63, 64 are bonded to the inner surfaces of the upper and lower shells 21, 22 making up the disc housing 25 by fusing the laminated layer and pressure-fitting the laminated layer to the fused laminated layer.

With the disc cartridge 1, the upper liner sheet 63 and the lower liner sheet 64are arranged on the inner surfaces of the upper and lower shells 21, 22 of the disc housing 25, respectively, for protecting the disc 10. Any dust and dirt, produced in the inside of the main cartridge body unit 20, are deposited on the upper liner sheet 63 and the lower liner sheet 64 without being deposited on the disc 10.

Also, with the disc cartridge 1, the inner surfaces of the upper and lower shells 21, 22 are smoothed to produce a smooth air stream in the main cartridge body unit 20 produced by rotation of the disc 10 to suppress disc surface deviations.

The above-described main cartridge body unit 20 has a length L along the direction of insertion thereof into the recording and/or reproducing apparatus, a length W perpendicular to the direction of insertion thereof into the recording and/or reproducing apparatus and a thickness H (see Fig.2) approximately equal to the dimensions of a 3.5 inch micro-flexible disc cartridge (3.5 inch MFD) conforming to ISO 9525. In the present specification, the length L along the direction of insertion of the disc cartridge 1 into the recording and/or reproducing apparatus, the length perpendicular to the direction of insertion of the disc cartridge 1 into the recording and/or reproducing apparatus and the thickness H are collectively termed outer dimensions.

The disc cartridge is compatible with the 3.5 inch MFD by setting its outer dimensions to approximately equal to those of the 3.5 inch MFD. That is, that is, the recording and/or reproducing apparatus associated with the disc cartridge 1 is designed so that its cartridge loading section can load a disc cartridge of the same outer dimensions as those of the disc cartridge 1. The present recording and/or reproducing apparatus has a recording and/or reproducing head unit including a head portion associated with the disc cartridge 1 and another head portion associated with the 3.5 inch MFD, and also has a disc rotation motor whose number of revolutions can be switched. With the present recording and/or reproducing apparatus, the type of the disc loaded thereon can be discerned to switch the head portions or the rpm of the motor depending on whether plural detection members detecting the loaded disc cartridge can be introduced into the first and second recording capacity discriminating holes, first to fourth recording capacity discriminating recesses 56 to 59 or into the design parameter discriminating cut-out 60.

By designing the recording and/or reproducing apparatus as described above and by setting the outer dimensions of the disc cartridge 1 so as to be approximately equal to those of the 3.5 inch MFD, it is possible to render the disc cartridge compatible with the 3.5 inch MFD now in widespread use.

The operation of recording/reproduction for the above-described disc cartridge is hereinafter explained.

When inserted via an insertion opening of the recording and/or reproducing apparatus into the inside thereof, the disc cartridge is loaded on its cartridge loading unit, as the disc cartridge is positioned by a cartridge loading mechanism in the longitudinal and transverse directions and along the height.

Simultaneously, the shutter member 33 is moved by a shutter driving member of the recording and/or reproducing apparatus in the direction indicated by arrow B in Figs.2 and 3 for opening the recording/reproducing apertures 31, 32.

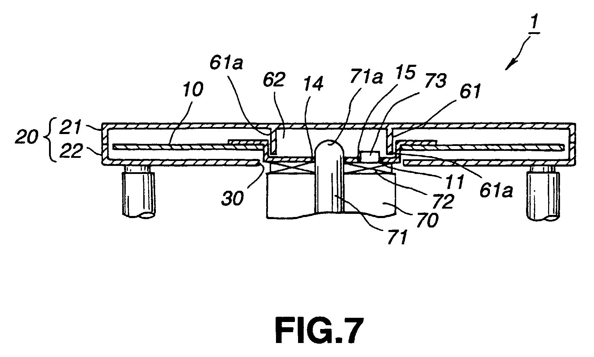

Into the main cartridge body unit 20 of the disc cartridge 1 loaded on the cartridge loading unit, a turntable 70 and the distal end of an output shaft 71 of a motor adapted to run the turntable in rotation are intruded via the table intruding opening 30 provided in the turntable 70, as shown in Fig.7. The center hub 11 is fixedly attracted to a chuck magnet 72 of the turntable 70. The output shaft of the motor has its distal end 71a intruded into the through-hole 14 of the center hub 11, while a driving member 73 provided on the turntable 70 is inserted into the driving opening 15 of the center hub 11, for positioning the disc 10 on the turntable 70.

With the center hub 11 thus fixedly attracted to the turntable 70, the motor is run in rotation, so that the disc 10 is run in rotation at an rpm larger than 300, such as 3600, in the main cartridge body unit 20. Since the disc 10 is increased in this manner in rpm, it is improved in signal transfer rate. Moreover, since the rpm of the disc 10 is increased, it is improved in relative speed with respect to the head device of the recording and/or reproducing apparatus so that the disc 10 is improved in recording density as compared to the above-mentioned 3.5 inch MFD rotating at an rpm of 300.

The output shaft 71 of the motor inserted into the through-hole 14 of the center hub 11 has its distal end 71a protruded from the center hub 11 towards the upper shell 21. The distal end 71a of the output shaft 71 of the motor is housed in the housing spacing 62, formed in an area surrounded by the circular rib 61 of the upper shell 21 without compressing against the inner surface of the upper shell 21.

In the present disc cartridge 1, since the distal end 71a of the output shaft 71 of the motor is housed in the housing spacing 62, without compressing against the inner surface of the upper shell 21, there is no risk of the inner surface of the upper shell 21 being scraped to produce dust and dirt even if the motor is run in rotation at an elevated speed to increase the rpm of the disc 10.

When the disc 10 is run in rotation, the recording and/or reproducing head device is intruded into the inside of the main cartridge body unit 20 via the recording/reproducing apertures 31, 32 provided in the upper and lower shells 21,22 to write information signals on the rotating disc 10 or to read out information signals recorded thereon.

With the above-described disc cartridge 1, in which the housing spacing 62 is provided in the area delimited by the circular rib 61 of the upper shell 21 and the distal end 71a of the output shaft 71 of the motor is housed in the housing spacing 62, without compressing against the inner surface of the upper shell 21, when the disc cartridge is loaded on the recording and/or reproducing apparatus, it is possible to prevent yielding of dust or dirt due to scraping of the inner surface of the upper shell 21 even on high-speed rotation of the motor.

Thus, with the present disc cartridge, it is possible to run the motor in high-speed rotation to raise the rpm and hence the signal transfer rate of the disc 10.

### Industrial Applicability

With the above-described disc cartridge according to the present invention, in which the housing spacing is provided in the area delimited by the circular rib of the upper shell and the distal end of the output shaft of the motor is housed in the housing spacing, without compressing against the inner surface of the upper shell, when the disc cartridge is loaded on the recording and/or reproducing apparatus, it is possible to prevent yielding of dust or dirt due to scraping of the inner surface of the upper shell even on high-speed rotation of the motor.

Thus, with the present disc cartridge, it is possible to keep the reliability even in the case which the recording density of the disc-shaped recording medium is increased.

## Claims

1. A disc cartridge comprising:
a disc-shaped recording medium;
paired upper and lower shells making up a main cartridge body unit for housing the disc-shaped recording medium therein; and
a circular projection formed at the center of the inner surface of the lower shell for limiting idle movements of said disc-shaped recording medium in said main cartridge body unit;
there being provided a housing spacing in an area delimited by said circular projection for housing the distal end of rotationally driving means, adapted for rotationally driving said disc-shaped recording medium on loading the disc cartridge on the recording and/or reproducing apparatus, in a contact free manner with respect to the inner surface of said upper shell.

2. The disc cartridge according to claim 1 wherein the outer dimensions of the main cartridge body unit are approximately equal to those of the disc cartridge the recording and/or reproduction for which is made with the distal end of the rotationally driving means rotationally driving said disc-shaped recording medium on loading the disc cartridge on the recording and/or reproducing apparatus being kept in contact with the inner surface of the upper shell.

3. The disc cartridge according to claim 2 wherein the disc cartridge, the recording and/or reproduction for which is made with the distal end of the rotationally driving means rotationally driving said disc-shaped recording medium on loading the disc cartridge on the recording and/or reproducing apparatus being kept in contact with the inner surface of the upper shell, conforms to ISO 9529.

4. The disc cartridge according to claim 1 wherein the areas of the inner surface of the upper and lower shells facing the disc-shaped recording medium are planar.

5. The disc cartridge according to claim 1 wherein the disc-shaped recording medium is run in rotation at an rpm larger than 300 by said rotationally driving means.
